Europäisches Patentamt

European Patent Office

Office européen des brevets

(11) Veröffentlichungsnummer: **0 129 716**

A2

(12) # EUROPÄISCHE PATENTANMELDUNG

(21) Anmeldenummer: 84105862.1

(22) Anmeldetag: 23.05.84

(51) Int. Cl.⁴: **H 04 L 11/16**
**H 04 Q 11/04**

(30) Priorität: 26.05.83 AT 1919/83

(43) Veröffentlichungstag der Anmeldung:
02.01.85 Patentblatt 85/1

(84) Benannte Vertragsstaaten:
AT BE DE FR GB NL SE

(71) Anmelder: International Standard Electric Corporation
320 Park Avenue
New York New York 10022(US)

(84) Benannte Vertragsstaaten:
BE DE FR GB NL SE

(71) Anmelder: ITT Austria Gesellschaft m.b.H.
Scheydgasse 41
A-1210 Wien(AT)

(84) Benannte Vertragsstaaten:
AT

(72) Erfinder: Wolfgang, Johann
Carabelligasse 5/134
A-1210 Wien(AT)

(72) Erfinder: Strasser, Helmut
Hockegasse 69
A-1180 Wien(AT)

(74) Vertreter: Villinger, Bernhard, Dipl.-Ing. et al,
Standard Elektrik Lorenz AG Patent- und Lizenzwesen
Postfach 300 929 Kurze Strasse 8
D-7000 Stuttgart 30(DE)

(54) **Anordnung zur Übertragung digitaler Signale.**

(57) Gegenstand der Anmeldung ist eine Anordnung zur Übertragung digitaler Signale zwischen mehreren Anschlußstellen. Es wird eine ringförmige Leitung mit Stichleitungen benutzt. Durch Zeitvielfachbetrieb und "Bus-Betrieb" wird erreicht, daß mit geringer Kanalzahl auch im Fall gestörter Anschlußstellen ein unterbrechungsfreier Betrieb für die dreslichen Anschlußstellen möglich ist. Verbindungen zum Außennetz laufen über eine Kopfstation. Ein Anwendungsgebiet sind Vermittlungsplätze größerer Nebenstellenanlagen.

./...

Fig. 1

J.Wolfgang - H.Strasser 2-5


Anordnung zur Übertragung digitaler Signale

Die Erfindung betrifft eine Anordnung zur Übertragung digitaler Signale zwischen einer Vielzahl von Anschlußstellen.

Aus der japanischen Patentoffenlegungsschrift 54-123810 (1979 - 123810) ist eine solche Anordnung bekannt, bei der die Anschlußstellen über einen ringförmigen Übertragungsweg miteinander verbunden sind, wobei eine Anschlußstelle als Kopfstation arbeitet, bei der der Übertragungsweg beginnt und endet, wobei ferner die anderen Anschlußstellen über Stichleitungen an den ringförmigen Übertragungswege angeschlossen sind, der ringförmige Übertragungsweg unabhängig von den jeweils bestehenden Verbindungen an den Abzweigstellen der Stichleitungen galvanisch durchgeschaltet ist, jeweils ein Sendeweg der Stichleitungen mit einer Sendesignalleitung des Übertragungswegs verbunden ist, auf dem die Anschlußstelle ihre abgehenden Signale aussendet (Sendesignale), jeweils eine Empfangssignalleitung des Übertragungswegs mit einem Empfangsweg der Stichleitungen verbunden ist, auf dem die Signale durch die Anschlußstelle empfangen werden (Empfangssignale), und der Übertragungsweg aus Zeitvielfachleitungen mit gerichtetem Zeitvielfachbetrieb besteht.

ZT/P1-Vl/Bl
14.05.1984

J.Wolfgang 2-5

Andere bekannte Netzwerke mit einfacher ringförmiger Architektur haben den Nachteil, daß jede Anschlußstelle immer aktiviert sein muß; fällt eine Station aus, so ist der gesamte Ring unterbrochen und nicht weiter betriebsfähig.

So ist z.B. aus der DE-OS 1 925 604 eine Schaltungsanordnung für eine Teilnehmerstelle eines ringförmigen PCM-Vermittlungsnetzwerks bekannt, bei dem eine Gruppe von Teilnehmern Zugriff zu einer gemeinsamen ringförmigen Leitung hat, auf der die PCM-Zeitvielfachsignale in einer Richtung zirkulieren. Diese Anordnung enthält in jeder Teilnehmerstelle Einrichtungen zum Mitlesen während des Verbindungsaufbaues, gegebenenfalls zum Verändern und Wiederaussenden des geänderten Codewortes auf dem gleichen Kanal. Es ist somit die Übertragungsleitung bei jeder Anschlußstelle unterbrochen und die Anschlußstelle wirkt als Wiederholverstärker. Nachteil dieser Lösung ist die Tatsache, daß der Ausfall einer einzigen Anschlußstelle den Informationsfluß mindestens in allen dahinterliegenden Anschlußstellen unterbindet.

Weiters sind in der DE-AS 20 00 898 sowie in der DE-AS 20 45 445 Verfahren genannt zur zeitmultiplexen Binär-Datenübertragung in einem aus einer Zentrale und mindestens einer Außenstelle bestehenden, eine geschlossene Zweidraht-schleife umfassenden Übertragungssystem, bei dem die Datenübertragung vom Ausgang der Zentrale zum Eingang der ersten Endstelle und vom Ausgang der einzelnen Endstellen jeweils zum Eingang der nächsten Endstelle mittels in den einzelnen Stationen erzeugter Induktionsimpulse erfolgt, wobei die Daten blockweise in zeitmultiplex aufeinanderfolgenden Kanalrahmen übertragen werden. Auch in diesen beiden Ver-

J.Wolfgang 2-5

fahren wird die Ringleitung in jeder Endstelle unterbrochen und das Signal neu generiert. Außerdem eignen sich diese Verfahren nur zur Übertragung von Datenblöcken und sind aufgrund der hohen Durchlaufverzögerungen nicht geeignet, Sprachsignale zu übertragen.

Aus der DE-AS 18 04 624 ist eine Zeitmultiplex-Fernsprech-Vermittlungsanlage mit einer schleifenförmig geschlossenen Zeitvielfachleitung bekannt, bei der von einer Zeitgeberstelle mehrere Zeitvielfachkanäle bestimmt werden. Jede Teilnehmerstelle wird aufgrund eines von der Zeitgeberstelle ausgesandten Synchronisierzeichens mit dem Zeitraster der Zeitgeberstelle synchronisiert. Zur Herstellung einer abgehenden Verbindung einer beliebigen Teilnehmerstelle wird irgendein von der Zeitgeberstelle als frei gekennzeichneter Zeitvielfachkanal belegt, wobei die rufende Teilnehmerstelle das Kennzeichen der zu rufenden Stelle im belegten Kanal auf die Leitung gibt. Die Herstellung der eigentlichen Gesprächsverbindung geschieht in der Weise, daß in einer Teilnehmerstelle zur Belegung eines freien Kanals oder zur Beantwortung eines ankommenden Rufes die geschlossene Schleife in diesem Kanal unterbrochen wird und die Enden der Leitung in diesem Kanal mit dem PCM-Codierer bzw. mit dem PCM-Decodierer verbunden werden.

Hier wird im Normalfall der Übertragungsweg nur in einem Zeitkanal unterbrochen, aber es besteht die Gefahr, daß der gesamte Verkehr zwischen den Teilnehmern lahmgelegt wird, wenn eine der Teilnehmerstellen gestört ist.

In der Zusatzanmeldung DE-OS 20 36 632 wird dieser Nachteil dadurch umgangen, daß parallel zur ersten Leitung

J.Wolfgang 2-5

eine zweite, schleifenförmig geschlossene Leitung mit entgegengesetzter Übertragungsrichtung angeordnet ist, zu der ebenfalls alle Teilnehmer über eine Anschlußschaltung Zugriff haben, daß in jeder Anschlußschaltung eine Überwachungsschaltung angeordnet ist, die eine Störung der gerade benutzten Leitung erkennt, eine Weiterleitung der Nachrichtenzeichen auf der jeweils anderen, schleifenförmig geschlossenen Leitung und die Aussendung eines Alarmzeichens veranlaßt, und daß in jeder Anschlußschaltung Schaltmittel angeordnet sind, die beim Empfang eines Alarmzeichens den Teilnehmer mit der jeweils anderen schleifenförmig geschlossenen Leitung verbinden.

Wenn nun ein Fehler in der ersten Leitung auftritt, dann werden in der der fehlerhaften Station vorausgehenden Station alle Nachrichtenzeichen aller Kanäle von der ersten Leitung auf die zweite Leitung übertragen und den gesamten Weg zurück bis zu der Station gesandt, die der fehlerhaften Station im Richtungssinn der 1. Leitung folgt.

Ein anderes bekanntes Verfahren ist die Verwendung eines Ringnetzes nach dem Bus-Prinzip, bei dem alle Anschlußstellen an eine Übertragungsleitung angeschlossen sind, ohne diese zu unterbrechen, wobei jede sendewillige Station spontan auf das Übertragungsmedium zugreifen kann. Entsprechende Vorkehrungen zur Vermeidung von Kollisionen müssen getroffen werden. Das bekannteste Verfahren sieht vor, daß die Station, die eine Nachricht auszusenden hat, das Übertragungsmedium auf Besetzzustand prüft. Ist der Bus frei, wird die Nachricht abgesetzt. Kommt es dabei zu einer Kollision, weil ein anderer Teilnehmer, der den Bus ebenfalls geprüft hat, auch gleichzeitig den gleichen Kanal belegen möchte, so wiederholen beide Stationen ihren

J.Wolfgang 2-5

zunächst vergeblichen Versuch , wobei durch einen aktivierten Zufallsgenerator eine Zeitverschiebung bei den beiden beteiligten Stationen erreicht wird. Es kann nur jeweils eine Nachricht auf dem Bus transportiert werden, die Länge ist variabel. Nachteilig bei diesem Prinzip ist, daß bei hoher Belastung es Busses durch häufige Kollisionen der Wirkungsgrad des Gesamtsystems verschlechtert wird.

Ein weiterer Nachteil des Ringnetzes bei Anwendung des Bus-Prinzips mit nur einem Kanal sind die nicht konstanten und oft sehr hohen Wartezeiten der Signale. Dadurch ist es nicht möglich, in solchen Netzen nach den Regeln der CCITT digital kodierte Signale zu übertragen.

Der Erfindung liegt die Aufgabe zugrunde, die bisher bekannten Übertragungsverfahren so zu verbessern, daß durch fehlerhafte Anschlußstellen    der übrige Verkehr nicht beeinträchtigt wird  und daß digital kodierte Signale ohne nennenswerte Verzögerung übertragen werden.

Erfindungsgemäß wird diese Aufgabe mit einer Anordnung nach Art der jap. OS 54-123810 dadurch gelöst, daß jeder an einer Verbindung beteiligten Anschlußstelle während der Dauer einer Verbindung ein bestimmter Zeitkanal des von der Kopfstation vorgegebenen Zeitrahmens zugeordnet ist, daß die Sendesignalleitung des Übertragungswegs in der Kopfstation mit einem Speicher verbunden ist, in dem die Sendesignale zwischengespeichert werden und aus dem die Signale in einem der nächstfolgenden Zeitrahmen entsprechend den Zeitlagen der Anschlußstellen, die die jeweiligen Signale empfangen sollen, sortiert ausgelesen werden, und nur

J.Wolfgang 2-5

auf Grund der Zeitkanalzuordnung zu den empfangenden Anschlußstellen die Empfangssignale jeweils nur in der gewünschten Anschlußstelle empfangen werden.

Die Anordnung hat insbesondere den Vorteil, daß durch eine
fehlerhafte Anschlußstelle   der übrige Verkehr nicht beeinträchtigt wird und daß die gesendeten Signale praktisch
ohne Verzögerung übertragen werden.

In einer für die Praxis besonders wichtigen Ausführungsform der Erfindung enthält die Kopfstation eine Schnittstellenschaltung, die den ringförmigen Übertragungsweg mit außenliegenden Netzen, z.B. öffentlichen Fernsprechnetzen, verbindet,
wobei über diese Schnittstellenschaltung von außen kommende Signale in einen Zwischenspeicher eingelesen werden und von der Sendesignalleitung stammende, nach außen
abgehende Signale ausgekoppelt werden.

Durch diese Anordnung ist es möglich, jede Anschlußstelle mit einem fremden Netz zu verbinden. Dies ist besonders für Fernsprechnebenstellenanlagen zur Kopplung mit
dem öffentlichen Fernsprechnetz wichtig. Ein weiteres
Anwendungsbeispiel ist die Zusammenschaltung von Vermittlungstischen in Fernsprechämtern. Die Ankopplung
solcher Vermittlungstische an digitale Fernsprechvermittlungsstellen kann mit geringem Aufwand, z.B. über
standardisierte CCITT-Schnittstellen erfolgen.

Nach einer Weiterbildung der erfindungsgemäßen Anordnung
werden die Sendesignalleitung und die Empfangssignalleitung des Übertragungswegs aus einem halben Zeitvielfachrahmen einer Zeitvielfachleitung gebildet, wobei die eine
Rahmenhälfte die Sendesignale und die andere die Empfangs-

J.Wolfgang 2-5

signale enthält. Bei beispielsweiser Verwendung eines CCITT-Zeitrahmens, werden von den 30 nutzbaren Zeitkanälen 15 Kanäle zur Übertragung der von den Anschlußstellen ausgesendeten Signale verwendet, diese Signale in der Kopfstelle ausgekoppelt und zwischengespeichert und in den 15 weiteren Kanälen in einem der nächstfolgenden Zeitrahmen wieder ausgesandt. Durch diese Anordnung wird zwar die Anzahl der möglichen Anschlußstellen halbiert, jedoch kann die Einsparung einer Ringleitung bei entsprechend aufwendigen Leitungswegen vorteilhaft sein.

Gemäß einer Weiterbildung der Erfindung enthalten die Anschlußstellen im Empfangsweg selbsteinstellende Entzerrer und im Sendeweg selbsteinstellende Vorentzerrer. Die Empfangsschaltung in jeder Anschlußstelle stellt sich automatisch auf den empfangenen Signalpegel ein, indem sie die Entscheidungsschwelle aus dem über eine Periode integrierten Spitzenwert des Empfangssignals automatisch ableitet und weiters aus demselben Spitzenwert ein Signal ableitet, das einen Entzerrer automatisch so einstellt, daß dieser die Impulsverzerrung, die auf dem zwischen Kopfstation und Anschlußstelle liegenden Leitungsstück auftritt, rückgängig macht. Die gesendeten Signale durchlaufen einen Vorentzerrer, der entsprechend dem erwähnten Spitzenwert sich automatisch so einstellt, daß das Signal nach Durchlaufen der zwischen der sendenden Anschlußstelle und der Kopfstation verbleibenden Leitungsstrecke an der Kopfstelle eine von der jeweiligen örtlichen Position der sendenden Anschlußstelle unabhängige Form aufweist.

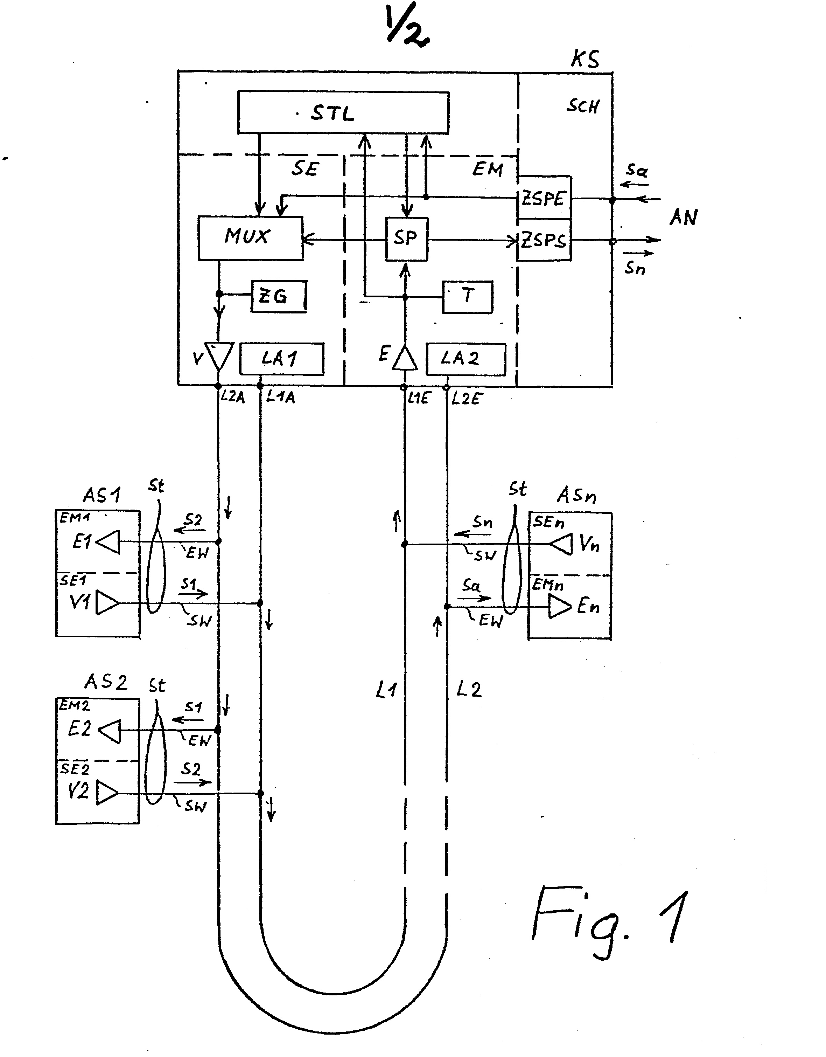

Weitere Einzelheiten der Erfindung ergeben sich aus der nachfolgenden Beschreibung eines Ausführungsbeispiels. In den zugehörigen Zeichnungen zeigen Fig. 1 das Blockschalt-

J.Wolfgang 2-5

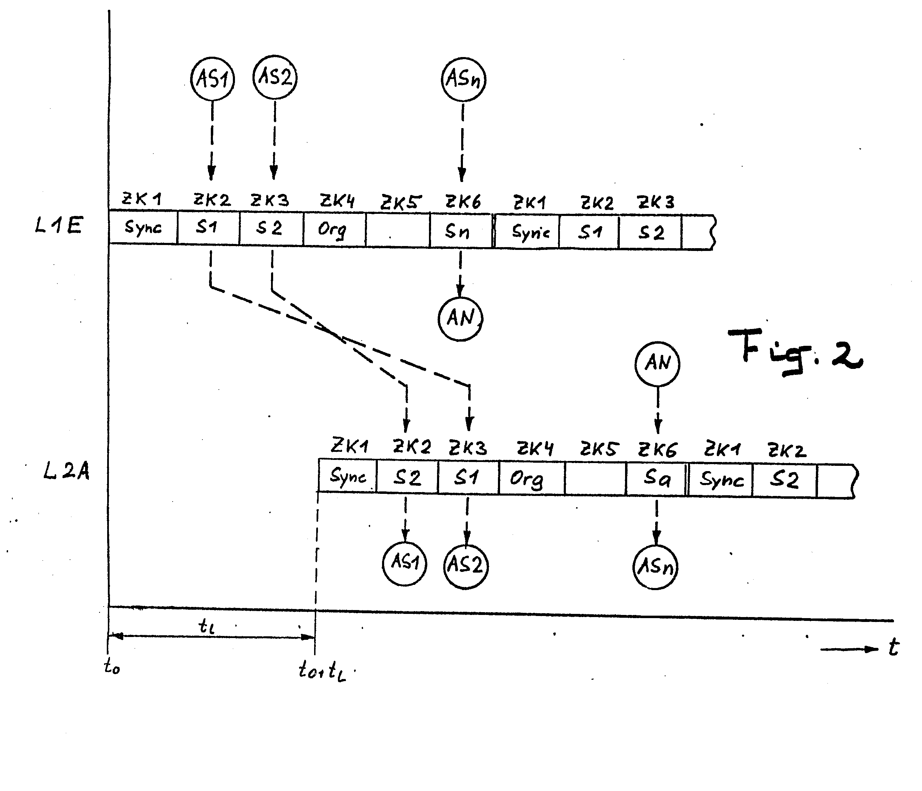

bild der erfindungsgemäßen Anordnung und Fig. 2 den Datentransfer von den ankommenden Leitungen zu den abgehenden Leitungen in der Kopfstation.

Wie in Fig. 1 dargestellt, sind alle Anschlußstellen AS1 ... ASn mittels zweier als Übertragungsweg dienender, ununterbrochener Ringleitungen, der Sendesignalleitung L1 und der Empfangssignalleitung L2, und über Stichleitungen St miteinander verbunden. Die Empfangssignalleitung L2 verbindet über die Klemme L2A die Sendeeinrichtung SE der Kopfstation KS mit den Empfangseinrichtungen EM1... EMn aller Anschlußstellen AS1 ... ASn und ist am anderen Ende mit einem Leitungsabschluß LA2 abgeschlossen. Die Sendesignalleitung L1 verbindet die Sendeeinrichtungen SE1... SEn der Anschlußstellen AS1 ... ASn mit der Empfangseinrichtung EM der Kopfstation KS und ist am Anfang mit dem Leitungsabschluß LA1 abgeschlossen. Die auf der Leitung auftretenden Impulsverzerrungen werden durch sendeseitige Vorentzerrer V, V1 ... Vn ausgeglichen bzw. durch empfangsseitige Entzerrer E, E1 ... En rückgängig gemacht. Die Kopfstation KS sendet mittels eines Zeitrahmengebers ZG einen Zeitrahmen an die Empfangssignalleitung L2. Vorzugsweise besteht das Zeitvielfachschema aus Rahmen zu je 32 Zeitkanälen, wobei 1 Zeitkanal für Synchron-Zeichen, 1 Zeitkanal für Organisationsinformationen und 30 Zeitkanäle für Sprach- oder Datensignale verwendet werden.

Aufgrund des vom Zeitrahmengeber ZG im Synchronisierkanal ausgesandten Synchronisierzeichens werden alle Anschlußstellen mit dem Zeitrahmen des Zeitrahmengebers synchronisiert.

J.Wolfgang 2-5


Die Anschlußstellen AS1 ... ASn senden auf der Sendesignalleitung L1 in während einer bestimmten Gesprächsverbindung ihnen zugeordneten Zeitkanälen ihre Informationen S1 ... Sn ab.


Die auf der Sendesignalleitung L1 (Ende) empfangenen Sendesignale der Anschlußstellen AS1 ... ASn werden in der Kopfstation KS in einem empfangsseitigen Entzerrer E verstärkt und entzerrt und in einen Speicher SP eingeschrieben.


Der erforderliche Takt- sowie Rahmensynchronisier-Informationen werden aus dem empfangenen Datenstrom in der Taktrückgewinnungs-Einheit T zurückgewonnen.


Wird diese Anordnung an ein außenliegendes Netz AN angeschlossen, so werden die von außen kommenden Informationen Sa über eine Schnittstellenschaltung Sch empfangen und im Zwischenspeicher ZSPE abgespeichert. Alle Signale des Zeitvielfach-Rahmens gelangen auch zu einer Steuerschaltung STL, die die darin enthaltenen Organisationssignale (z.B. Verbindungswunsch zu einer bestimmten Anschlußeinheit oder zum außenliegenden Netz) entnimmt und daraus Steuerinformationen ableitet. Die Steuerschaltung STL empfängt auch die Daten vom außenliegenden Netz und kann auch aus diesen Daten die entsprechende Steuerinformation ableiten. Daraufhin stellt die Steuerschaltung STL einen Multiplexer MUX so ein, daß sich im Zeitmultiplex-Rahmen, der über den Verstärker V auf die Empfangssignalleitung L2 (Klemme L2A) ausgesendet wird, sowohl Informationen aus dem Speicher SP als auch Informationen des außenliegenden Netzes aus dem Zwischenspeicher ZSPE befinden, wobei diese Informationen entsprechend der Zeitlage der Zielanschlußstelle sortiert wurden.

J.Wolfgang 2-5

Der Zeitrahmengeber ZG fügt zu dem aus dem Multiplexer MUX kommenden Datenstrom die erforderlichen Synchronisierinformationen hinzu.

Die Leitungsabschlüsse LA1 und LA2 sorgen für den erforderlichen elektrischen Abschluß der Sendesignalleitung L1 an ihrem Anfang und der Empfangssignalleitung L2 an ihrem Ende.

Informationen, die ins außenliegende Netz AN übertragen werden sollen, werden aus dem Speicher Sp in einen zweiten Zwischenspeicher ZSPS der Schnittstellenschaltung SCH übertragen, von wo sie in das außenliegende Netz gesendet werden.

In Fig. 2 ist der Datentransfer in der Kopfstation von Anschlußstelle zu Anschlußstelle bzw. von Anschlußstelle zu einem außenliegenden Netz gezeigt. Zur Vereinfachung der Darstellung sind Zeitrahmen mit nur 6 Zeitkanälen ZK1 ... ZK6 dargestellt. Es sind in diesem Beispiel die Anschlußstellen AS1 und AS2 (nach Fig. 1) miteinander verbunden; Anschlußstelle ASn spricht mit einem Partner im außenliegenden Netz AN.

Im oberen Teil des in Fig.2 dargestellten Diagramms ist ein Zeitrahmen dargestellt, dessen Zeitkanal 1 (ZK1) zum Zeitpunkt to an der Eingangsklemme L1E der Sendessignalleitung L1 in der Kopfstation eintrifft.

Zeitkanal ZK1 dient stets der Synchronisierung. Die nächsten beiden Zeitkanäle ZK2 bzw. ZK3 tragen die Sendesignale S1 bzw. S2 der Anschlußstellen AS1 bzw. AS2 und zwar so, daß der Zeitkanal ZK2 der Anschlußstelle AS1

J.Wolfgang 2-5


und der Zeitkanal ZK3 der Anschlußstelle AS2 zugeordnet ist. Zeitkanal ZK4 ist als Organisations-Zeitkanal an eine Steuereinrichtung (STL in Fig. 1) fix durchgeschaltet. Er dient beispielsweise zur Anmeldung von Verbindungswünschen.

Der Zeitkanal ZK5 ist in diesem Beispiel nicht belegt. Der letzte Zeitkanal ZK6 trägt das Signal Sn, das von der Anschlußstelle ASn gesendet wird.

In der Kopfstation werden die Informationen der einzelnen Zeitkanäle gespeichert, die für das außenliegende Netz AN bestimmten Signale (in diesem Fall Sn) an dieses ausgesendet, und die vom außenliegende Netz ankommenden Signale Sa gespeichert.

Die gespeicherten Signale werden sodann entsprechend den Zeitlagen der Zielteilnehmer neu sortiert und nach einer Laufzeit t1 an der Ausgangsklemme L2A an die Empfangssignalleitung L2 als neuer Zeitrahmen (unterer Teil des Diagramms in Fig. 2) ausgesendet. Die Anschlußstelle AS1 empfängt nun in dem ihr auf der Empfangssignalleitung L2 zugeordneten Zeitkanal ZK2 das Signal S2, das von der Anschlußstelle AS2 ausgesendet wurde, während Anschlußstelle AS2 im Zeitkanal ZK3 das Signal S1 der Anschlußstelle AS1 empfängt. Anschlußstelle ASn empfängt im Zeitkanal ZK6 das Signal Sa, das aus dem außenliegenden Netz AN kommt. Somit ist ein Informationsfluß in beiden Richtungen gegeben.

0129716

International Standard Electric
Corporation, New York


J.Wolfgang - H.Strasser 2-5


Patentansprüche


1. Anordnung zur Übertragung digitaler Signale zwischen
einer Vielzahl von Anschlußstellen, die über einen ringförmigen
Übertragungsweg miteinander verbunden sind, wobei eine
Anschlußstelle als Kopfstation arbeitet, bei der der Übertragungsweg beginnt und endet, wobei ferner die anderen Anschlußstellen über Stichleitungen an den ringförmigen Übertragungsweg angeschlossen sind, der ringförmige Übertragungsweg unabhängig von den jeweils bestehenden Verbindungen an den
Abzweigstellen der Stichleitungen galvanisch durchgeschaltet
ist, jeweils ein Sendeweg der Stichleitungen mit einer
Sendesignalleitung des Übertragungswegs verbunden ist,
auf dem die Anschlußstelle ihre abgehenden Signale aussendet (Sendesignale), jeweils eine Empfangssignalleitung des Übertragungswegs mit einem Empfangsweg der
Stichleitungen verbunden ist, auf dem die Signale durch
die Anschlußstelle empfangen werden (Empfangssignale),
und der Übertragungsweg aus Zeitvielfachleitungen
mit gerichtetem Zeitvielfachbetrieb besteht, d a d u r c h
g e k e n n z e i c h n e t , daß jeder an
einer Verbindung beteiligten Anschlußstelle (AS1, AS2)
während der Dauer einer Verbindung ein bestimmter Zeitkanal (ZK) des von der Kopfstation (KS) vorgegebenen
Zeitrahmens zugeordnet ist, daß die Sendesignalleitung
(L1) des Übertragungswegs in der Kopfstation (KS) mit

ZT/P1-VL/BL
14.05.1984                                                    -2-

J.Wolfgang 2-5


einem Speicher (Sp) verbunden ist, in dem die Sendesignale zwischengespeichert werden und aus dem die Signale in einem der nächstfolgenden Zeitrahmen entsprechend den Zeitlagen der Anschlußstellen, die die jeweiligen Signale empfangen sollen, sortiert ausgelesen werden, und nur auf Grund der Zeitkanalzuordnung zu den empfangenden Anschlußstellen die Empfangssignale jeweils nur in der gewünschten Anschlußstelle empfangen werden.


2.  Anordnung nach Anspruch 1, dadurch gekennzeichnet, daß die Kopfstation (KS) eine Schnittstellenschaltung (Sch) enthält, die den ringförmigen Übertragungsweg mit außenliegenden Netzen, z.B. öffentlichen Fernsprechnetzen, verbindet, wobei über diese Schnittstellenschaltung (Sch) von außen kommende Signale in einen Zwischenspeicher (ZSPE) eingelesen werden und von der Sendesignalleitung (L1) stammende, nach außen abgehende Signale ausgekoppelt werden.


3.  Anordnung nach Anspruch 1 oder 2, dadurch gekennzeichnet, daß die Sendesignalleitung (L1) und die Empfangssignalleitung (L2) des Übertragungswegs aus einem halben Zeitvielfachrahmen einer Zeitvielfachleitung gebildet werden; wobei die eine Rahmenhälfte die Sendesignale und die andere die Empfangssignale enthält.


4.  Anordnung nach einem der Ansprüche 1, 2 oder 3, dadurch gekennzeichnet, daß die Anschlußstellen (AS1...ASn) im Empfangsweg selbsteinstellende Entzerrer (E1...En) und im Sendeweg selbsteinstellende Vorentzerrer (V1...Vn) enthalten.

Fig. 1

Fig. 2

2/2

0129716